# EUROPÄISCHE PATENTANMELDUNG

(11) **EP 3 437 926 A1**
(43) Veröffentlichungstag der Anmeldung: **06.02.2019**
(21) Anmeldenummer: 17184466.5
(22) Anmeldetag: 02.08.2017
(51) Int. Cl.: B60P 3/20, B62D 33/04, B60H 1/32

(54) **KOFFERAUFBAU FÜR EIN NUTZFAHRZEUG**

(71) Anmelder: Schmitz Cargobull AG, 48341 Altenberge (DE)
(72) Erfinder: Flacke, Norbert, 45894 Gelsenkirchen (DE); Hintemann, Ulrich, 48739 Legden (DE); Niewerth, Markus, 48683 Ahaus (DE); Beelmann, Reinhard, 45721 Haltern am See (DE)
(74) Vertreter: Cohausz & Florack

(57) **Zusammenfassung**

Die vorliegende Erfindung betrifft einen Kofferaufbau (12) für ein Nutzfahrzeug (2,3), wobei der Kofferaufbau (12) einen Laderaum mit einer darin enthaltenen Atmosphäre umgrenzt, und wobei der Kofferaufbau (12) ein Wandelement (15) umfasst, an dem eine Transportkältemaschine (24) zum Temperieren der Atmosphäre des Laderaums sitzt. Der erfindungsgemäße Kofferaufbau (12) ist mit einer Transportkältemaschine ausgestattet und ermöglicht ein Durchladen. Dies wird erfindungsgemäß dadurch erreicht, dass die Transportkältemaschine (24) aus einer ersten Stellung, in der sie an dem ihr zugeordneten Wandelement (15) des Kofferaufbaus (12) sitzt, in eine zweite Stellung bewegbar ist, in der ein Durchgang zu dem Laderaum ermöglicht ist.

## Beschreibung

Die Erfindung betrifft einen Kofferaufbau für ein Nutzfahrzeug, wobei der Kofferaufbau einen Laderaum mit einer darin enthaltenen Atmosphäre umgrenzt, und wobei der Kofferaufbau ein Wandelement umfasst, an dem eine Transportkältemaschine zum Temperieren der Atmosphäre des Laderaums sitzt.

Typischerweise weisen solche Kofferaufbauten eine Quaderform mit zwei quer zu ihrer Längsrichtung ausgerichteten, den Abschluss des Kofferaufbaus an dessen Vorder- und Rückseite bildende Querseitenwänden, zwei Längsseitenwänden, von denen sich jeweils eine längs einer Längsseite des Kofferaufbaus zwischen den ihr zugeordneten Randkanten der Querseitenwände erstreckt, sowie mit einem Dach auf, das den vom Kofferaufbau umgrenzten Laderaum an seiner Oberseite abschließt und jeweils in einem Eckbereich an die Längsseitenwände und die Querseitenwände des Kofferaufbaus stößt.

Kofferaufbauten der hier in Rede stehenden Art werden auf Nutzfahrzeugen zum Transport von temperaturempfindlichen Waren eingesetzt. Die Transportkältemaschine temperiert dabei nach Art einer Klimaanlage die im Laderaum vorhandene Atmosphäre und damit einhergehend das im Laderaum verstaute Gut. Zu diesem Zweck ist die Transportkältemaschine üblicherweise an der Außenseite des bei normaler Voranfahrt vorderen stirnseitigen Wandelements angeordnet und nimmt dessen gesamte Außenfläche ein.

Konventionelle Transportkältemaschinen weisen üblicherweise ein Gehäuse und einen von dem Gehäuse ummantelten Rahmen auf. Der Rahmen trägt die Komponenten, die benötigt werden, um die gewünschte Temperierung der im Laderaum vorhandenen Atmosphäre bzw. des im Laderaum verstauten Guts zu bewirken. Zu diesen Komponenten gehören typischerweise ein Verdichter, ein Antrieb für den Verdichter, ein Kondensator, ein Wärmetauscher, eine Steuer- und Regeleinrichtung, ein Gebläse sowie eine in die Transportkältemaschine integrierte Energieversorgung, über die die zum Antrieb des Verdichters und dem Gebläse und sonstigen elektrischen Komponenten benötigte Energie zur Verfügung gestellt wird. Die Energieversorgung wird dabei üblicherweise durch einen Verbrennungsmotor gebildet, der einen Generator antreibt, welcher die benötigte elektrische Energie liefert.

Bei den Nutzfahrzeugen, für die Kofferaufbauten der erfindungsgemäßen Art bestimmt sind, handelt es sich beispielsweise um Lastkraftwagen, die über einen eigenen Antriebsmotor verfügen, oder um Anhänger, Sattelauflieger und desgleichen, die über keinen eigenen Antrieb verfügen, sondern von einer geeigneten Zugmaschine gezogen werden. Dabei können die Kofferaufbauten jeweils dauerhaft fester Bestandteil des jeweiligen Nutzfahrzeugs sein oder beispielsweise als so genannte "Wechselbrücken" ausgebildet sein. Bei diesen Wechselbrücken (in der Fachsprache auch Wechselaufbau oder Wechselbehälter genannt) handelt es sich um austauschbare Ladungsträger, die sich für einen Transport nach Art eines Containers auf das Fahrgestell des jeweiligen Nutzfahrzeugs setzen und bei Erreichen des Ziels von dem Nutzfahrzeug wieder trennen lassen. Dabei weisen Wechselbrücken üblicherweise Stützen auf, die sich aus einer am Boden der Wechselbrücke angeschwenkten Transportstellung in eine Stützstellung schwenken lassen, in der sie den Kofferaufbau oberhalb des jeweiligen Untergrunds in einer Höhe abstützen, in der sie vom Fahrgestell des Nutzfahrzeugs unterfahren werden können. Auf diese Weise können die Wechselbrücken mit minimiertem Aufwand für den Transport auf dem Nutzfahrzeug positioniert und nach Gebrauch wieder in ihrer Wartestellung abgestellt werden.

Um ein einfaches Beladen eines Zugverbands zu ermöglichen, der aus einem Lastkraftwagen, der einen ersten Kofferaufbau aufweist, und einem Anhänger gebildet ist, der einen zweiten Kofferaufbau besitzt, können der Kofferaufbau des Lastkraftwagens an seiner rückwärtigen Querseitenwand und der Anhänger an seiner stirnseitigen und rückwärtigen Querseitenwand jeweils mit einer in der Regel doppelflügeligen Türe versehen sein. Wenn die Türen beider Kofferaufbauten geöffnet sind, kann so die Beladung der von beiden Kofferaufbauten umgrenzten Laderäume beispielsweise mit einem Gabelstapler erfolgen, der durch die rückwärtige Türe des Kofferaufbaus des Anhängers durch den Laderaum des Anhängers bis zum Laderaum des Lastkraftwagens fahren kann. Dieser Ladevorgang wird auch als "Durchladen" bezeichnet. Über den Abstand zwischen der stirnseitigen Querseitenwand des Kofferaufbaus des Anhängers und der rückwärtigen Querseitenwand des Kofferaufbaus des Lastkraftwagens wird dabei eine Rampe gelegt, die beispielsweise vom Anhänger oder vom Lastkraftwagen mitgeführt wird.

Bei Kofferaufbauten, die mit einer Transportkältemaschine an einer ihrer stirn- oder rückwärtigen Wandelemente versehen sind, ist eine solche Durchbeladung nicht möglich, da für die Befestigung der Transportkältemaschine jeweils eine feste Wand benötigt wird.

Vor dem Hintergrund des Standes der Technik hat sich die Aufgabe ergeben, einen Kofferaufbau zu schaffen, der mit einer Transportkältemaschine ausgestattet ist und für ein Durchladen eingerichtet ist.

Die Erfindung hat diese Aufgabe durch einen gemäß Anspruch 1 ausgebildeten Kofferaufbau gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßer Kofferaufbau für ein Nutzfahrzeug umgrenzt demnach einen Laderaum mit einer darin enthaltenen Atmosphäre, wobei der Kofferaufbau ein Wandelement umfasst, an dem eine Transportkältemaschine zum Temperieren der Atmosphäre des Laderaums sitzt.

Erfindungsgemäß ist nun bei einem solchen Kofferaufbau die Transportkältemaschine aus einer ersten Stellung, in der sie an dem ihr zugeordneten Wandelement des Kofferaufbaus sitzt, in eine zweite Stellung bewegbar, in der ein Durchgang zu dem Laderaum ermöglicht ist. Die Querseitenwand, an der die Transportkältemaschine befestigt ist, ist in zwei um jeweils eine Schwenkachse verschwenkbare Türflügel geteilt, und die Transportkältemaschine ausschließlich an einem der Türflügel befestigt, so dass die Transportkältemaschine mit dem Türflügel aus einer Schließstellung, in der die Querseitenwand geschlossen ist, in eine Öffnungsstellung schwenkbar ist, in der die Querseitenwand geöffnet ist.

Bei einem erfindungsgemäßen Kofferaufbau ist also die Transportkältemaschine derart an dem jeweils ihr zugeordneten Wandelement befestigt, dass sie aus ihrer ersten Stellung, in der sie beispielsweise für den normalen Transportbetrieb fest an dem Wandelement gehalten ist, in eine Stellung bewegt werden kann, in der sie so von dem Wandelement entfernt ist, dass an der Stelle, an der sich zuvor die Transportkältemaschine befunden hat, ein Zugang zum Laderaum möglich ist.

Indem die Transportkältemaschine aus dem Bereich des Zugangs zum Laderaum wegbewegbar ist, kann somit das Wandelement, an dem die Transportkältemaschine in ihrer ersten Stellung sitzt, geöffnet werden oder innerhalb dieses Wandelements eine Öffnung freigegeben werden, um beispielsweise dann, wenn ein aus Lastkraftwagen und Anhänger zusammengesetzter Zugverband beladen werden soll, einen problemlosen Durchgang vom Laderaum des Kofferaufbaus des Anhängers zum Kofferaufbau des Lastkraftwagens trotz der beispielsweise im Normalbetrieb am Aufbau des Anhängers oder am Aufbau des Zugfahrzeugs sitzenden Transportkältemaschine zu ermöglichen.

Das Öffnen des Zugangs zum Laderaum des erfindungsgemäß ausgebildeten Laderaums kann auf einfache Weise dadurch erfolgen, dass das Wandelement in dem Bereich, in dem die Transportkältemaschine in ihrer ersten Stellung sitzt, zumindest abschnittsweise als Türelement ausgebildet ist, das aus einer geschlossenen Stellung, in der der Durchgang zum Laderaum versperrt ist, in eine geöffnete Stellung bewegbar ist, in der der Durchgang zum Laderaum ermöglicht ist. "Zumindest abschnittsweise als Türelement ausgebildet" heißt in diesem Zusammenhang, dass das betreffende Wandelement insgesamt ein Türelement darstellen kann, das zwischen einer Schließstellung und einer Öffnungsstellung bewegbar ist, oder dass das Wandelement in einen, zwei oder mehr bewegliche Türabschnitte unterteilt ist, die jeweils beweglich sind, um die nach dem erfindungsgemäß ermöglichten Wegbewegen der Transportkältemaschine zugängliche Durchgangsöffnung des Kofferaufbaus zu öffnen und zu schließen. Denkbar sind in dieser Hinsicht auch Wandelemente, die einen stehenden Wandabschnitt und ein Türelement oder zwei oder mehr bewegliche Türelemente umfassen. So kann das Wandelement, an dem die Transportkältemaschine in ihrer ersten Stellung sitzt, auch mindestens in einem Abschnitt als aus zwei oder mehr segmentartigen Türelementen zusammengesetztes Roll- oder Falttor ausgebildet sein.

Als besonders praxisgerechte Ausgestaltung der Erfindung hat es sich erwiesen, wenn im Fall, dass das mit der Transportkältemaschine versehene Wandelement ein in der voranstehend erläuterten Weise ausgebildetes Türelement umfasst, dieses Türelement als mindestens ein um ein an dem Kofferelement vorgesehene Schwenkachse verschwenkbarer Türflügel ausgebildet ist. Dabei ergibt sich eine einfache Handhabbarkeit bei geringem Raumbedarf für die zum Öffnen der Durchgangsöffnung erforderlichen Bewegungen dann, wenn das Wandelement, an dem die Transportkältemaschine in ihrer ersten Stellung sitzt, zusätzlich zu einem ersten Türelement, an dem die Transportkältemaschine in ihrer ersten Stellung sitzt, ein zweites als Türflügel ausgebildetes Türelement aufweist, das zwischen einer geschlossenen Stellung, in der es gemeinsam mit dem dann ebenfalls in geschlossener Stellung befindlichem ersten Türflügel-Element den Zugang zum Laderaum versperrt, in eine geöffnete Stellung bewegbar ist, in der der Durchgang zum Laderaum freigegeben ist. Um ausreichenden Platz für die Befestigung der Transportkältemaschine zu haben, kann es hier zweckmäßig sein, wenn das Türelement, an dem die Transportkältemaschine befestigt ist, einen größeren Teil der Fläche des Wandelements in Anspruch nimmt als das andere Türelement. Beispielsweise kann dazu die Breite des Türelements, an dem die Transportkältemaschine befestigt ist, zwei Drittel der Breite des Wandelements einnehmen.

Im Fall, dass das Wandelement zumindest abschnittsweise als Türelement ausgebildet ist, ergibt sich darüber hinaus eine besonders einfach handhabbare und gleichzeitig robuste Ausgestaltung eines erfindungsgemäßen Kofferaufbaus, wenn die Transportkältemaschine mit dem Türelement verbunden ist und gemeinsam mit diesem Türelement zwischen dessen geöffneter und geschlossener Stellung hin und her bewegbar ist. Bei dieser Ausgestaltung führt also die Bewegung des Türelements zwischen seiner Öffnungs- und Schließstellung zu einer korrespondierenden Bewegung der Transportkältemaschine zwischen ihrer ersten und ihrer zweiten Stellung, so dass nur noch entweder die Transportkältemaschine oder der mit ihr verkoppelte Türflügel betätigt werden müssen, um einerseits die Transportkältemaschine aus dem Bereich des im jeweiligen Wandelement freizugebenden Durchgangs und andererseits den Türflügel in seiner Öffnungsstellung so zu bewegen, dass der Durchgang tatsächlich freigegeben ist.

Die voranstehend dargelegte, optional vorgesehene Verbindung zwischen dem Türelement und der Transportkältemaschine kann beispielsweise als gelenkige Verkopplung ausgebildet sein. Dies kann sinnvoll sein, wenn der Bewegungsweg der Transportkältemaschine vom Bewegungsweg des Türelements abweichen soll, damit sich Transportkältemaschine und Türe bei geöffnetem Durchgang an unterschiedlichen Positionen befinden.

Besonders einfach lässt sich die Verbindung von Transportkältemaschine und zugeordnetem Türelement dadurch ausgestalten, dass das Türelement die Transportkältemaschine trägt und dabei die Transportkältemaschine an dem Türelement dauerhaft fest fixiert ist.

Alternativ zu einer in einer der voranstehend erläuterten Varianten erfolgenden Verkopplung von Türelement und Transportkältemaschine kann es bei bestimmten Anforderungen auch zweckmäßig sein, dass die Transportkältemaschine unabhängig von dem Wandelement zwischen ihrer ersten Stellung, in der sie an dem Wandelement sitzt, und ihrer zweiten Stellung bewegbar ist, in der sie von dem Wandelement wegbewegt ist. Eine solche unabhängige Beweglichkeit kann beispielsweise dann sinnvoll sein, wenn die Transportkältemaschine vollständig von dem Kofferaufbau getrennt werden soll, um auch unter beengten räumlichen Bedingungen ein einfaches Öffnen des Durchgangs durch eine entsprechende Bewegung des Türelements zu ermöglichen, welches in dem der Transportkältemaschine zugeordneten Wandelement mindestens abschnittsweise vorgesehen ist.

Eine von der Beweglichkeit des Türelements unabhängige Beweglichkeit der Transportkältemaschine kann dabei auf einfache Weise dadurch hergestellt werden, dass bei einem erfindungsgemäßen Kofferaufbau die Transportkältemaschine optional von einem Rahmen getragen ist, über den die Beweglichkeit der Transportkältemaschine zwischen ihrer ersten und zweiten Stellung hergestellt ist. Diese Ausgestaltung der Erfindung eignet sich insbesondere auch für das Nach- oder Umrüsten von herkömmlichen Kofferaufbauten, bei denen die Transportkältemaschine beispielsweise im Bereich von vorhandenen Türanlagen angeordnet werden soll.

Die erfindungsgemäß vorgesehene Beweglichkeit der Transportkältemaschine zwischen ihren mindestens zwei Stellungen kann in jeder Weise hergestellt werden, die unter den jeweiligen räumlichen oder konstruktiven Bedingungen sinnvoll und zweckmäßig sind, die sich am jeweiligen Kofferaufbau und in seinem Einsatzumfeld ergeben.

So kann die Transportkältemaschine beispielsweise in vertikaler oder horizontaler Richtung verschoben werden, um sie aus dem Bereich des freizugebenden Durchgangs zum Laderaum des Kofferaufbaus zu bringen.

Eine konstruktiv besonders einfach zu verwirklichende Möglichkeit, die erfindungsgemäß vorgesehene Beweglichkeit der Transportkältemaschine zu realisieren, besteht darin, dass die Transportkältemaschine um eine Schwenkachse zwischen ihrer ersten und zweiten Stellung verschwenkbar an dem Kofferaufbau gelagert ist. Die Schwenkachse kann dabei horizontal oder vertikal ausgerichtet sein, wobei bei einer vertikalen Ausrichtung der Schwenkachse die Abstützung der Transportkältemaschine in ihrer von der freizugebenden Öffnung wegbewegten Stellung minimiert ist.

Um die für die erfindungsgemäß vorgesehene Beweglichkeit der Transportkältemaschine erforderlichen Führungen oder Gelenke an dem Kofferaufbau oder an dem der Transportkältemaschine zugeordneten Wandelement zu befestigen, kann ein Rahmen genutzt werden, wie er bei Kofferaufbauten der hier in Rede stehenden Art regelmäßig vorhanden ist, um mindestens das Wandelement, an dem die Transportkältemaschine in ihrer ersten Stellung sitzt, zu halten. So kann an einem solchen Rahmen beispielsweise ein Schwenkgelenk befestigt sein, um das die Transportkältemaschine verschwenkbar ist.

Es versteht sich dabei von selbst, dass sich die Transportkältemaschine erforderlichenfalls auch in einer aus Schwenk- und Schiebebewegung kombinierten Bewegung zwischen ihrer ersten Stellung, in der der jeweilige Durchgang versperrt ist, in ihre zweite Stellung bringen lässt, in der der Durchgang freigegeben ist.

Bei dem Türelement, das der Transportkältemaschine gemäß den voranstehend erläuterten Varianten der Erfindung zugeordnet ist, kann es sich auch um einen Türflügel oder desgleichen handeln, der Teil einer standardmäßig zum Betreten des Laderaums an dem jeweiligen Kofferaufbau vorgesehenen Türanlage ist.

Grundsätzlich ist es möglich, die Transportkältemaschine in erfindungsgemäßer Weise beispielsweise an der Stirnseite oder an der Rückseite des Kofferaufbaus anzuordnen. Da das rückwärtige Wandelement jedoch üblicherweise häufiger zum Be- und Entladen geöffnet und geschlossen wird, hat es sich als zweckmäßig erwiesen, wenn das Wandelement, an dem die Transportkältemaschine befestigt ist, wie bei den konventionellen mit einer Transportkältemaschine versehenen Kofferaufbauten eine bei normaler Vorwärtsfahrt des mit dem Kofferaufbau jeweils ausgestatteten Nutzfahrzeug frontseitig angeordnete Stirnwand des Kofferaufbaus ist.

Unabhängig davon, an welchem Wandelement die Transportkältemaschine in erfindungsgemäßer Weise angeordnet ist, hat es sich im Hinblick auf eine optimale Raumausnutzung und eine optimale Abfuhr der Abwärme der Kältemaschine bewährt, wenn die Transportkältemaschine an einer vom Laderaum abgewandten Außenseite des Kofferaufbaus befestigt ist.

Im Fall, dass der Kofferaufbau über einem Boden errichtet ist, kann es vorteilhaft sein, im Laderaum ein Rampenelement vorzusehen, das aus einer Normalstellung, die es inne hat, wenn der Durchgang zum Laderaum versperrt ist, bei geöffnetem Durchgang in eine Gebrauchsstellung bewegbar ist, in der das Rampenelement einen Abstand zwischen der dem Durchgang zugeordneten Ladekante und einer benachbart zu dieser angeordneten anderen Ladekante überbrückt. Dieses Rampenelement kann um eine Schwenkachse verschwenkbar sein, die sich längs der Bodenkante erstreckt, die dem mit der Transportkältemaschine versehenen Wandelement zugeordnet ist. Auf diese Weise lässt sich eine einfache Handhabung und sichere Verstauung in der Normalstellung des Rampenelements erreichen. Dabei kann das Rampenelement in seiner Normalstellung an der dem Laderaum zugeordneten Innenseite des mit der Transportkältemaschine versehenen Wandelements anliegen. Auf diese Weise ist der Raumbedarf für das Rampenelement minimiert.

Um den Raumbedarf oder das Gewicht der in erfindungsgemäßer Weise beweglichen Transportkältemaschine zu minimieren, kann die Transportkältemaschine als Leichtbauversion ausgeführt sein, die nicht über eine integrierte eigene Energieversorgung verfügt, sondern über einen entsprechenden Anschluss mit einer Energieversorgung verkoppelt werden kann, die am jeweiligen Nutzfahrzeug oder von externer Seite zur Verfügung steht. So ist es beispielsweise denkbar, die Transportkältemaschine rein elektrisch über das Bordnetz des Nutzfahrzeugs oder im Fall von Wartezeiten über eine externe elektrische Energiequelle zu speisen. Indem hierbei auf den üblicherweise vorgesehenen verbrennungsmotorisch erfolgenden Antrieb der Transportkältemaschine verzichtet wird, lassen sich Bauraum und Gewicht soweit reduzieren, dass auch der für die Beweglichkeit und Abstützung der Transportkältemaschine an dem Kofferaufbau erforderliche Aufwand minimiert sind.

Nachfolgend wird die Erfindung anhand einer ein Ausführungsbeispiel darstellenden Zeichnung näher erläutert. Deren Figuren zeigen jeweils schematisch:

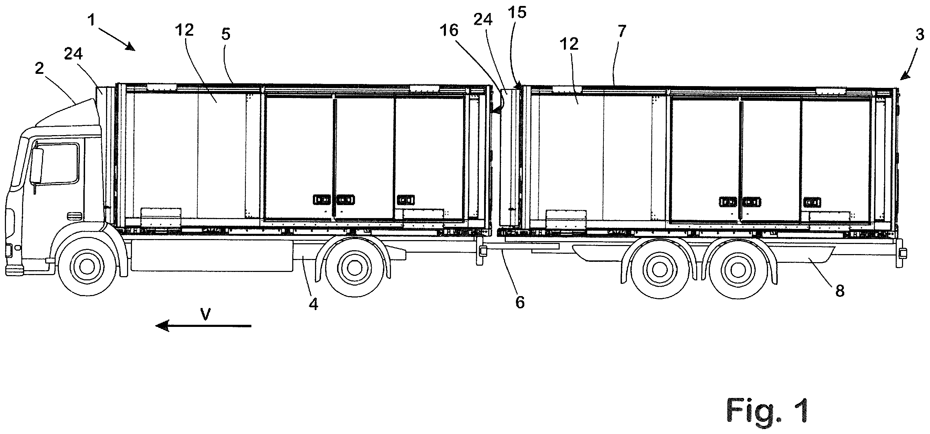

- Fig. 1: einen aus einem Lastkraftwagen und einem Anhänger gebildeten Zugverband in seitlicher Ansicht;

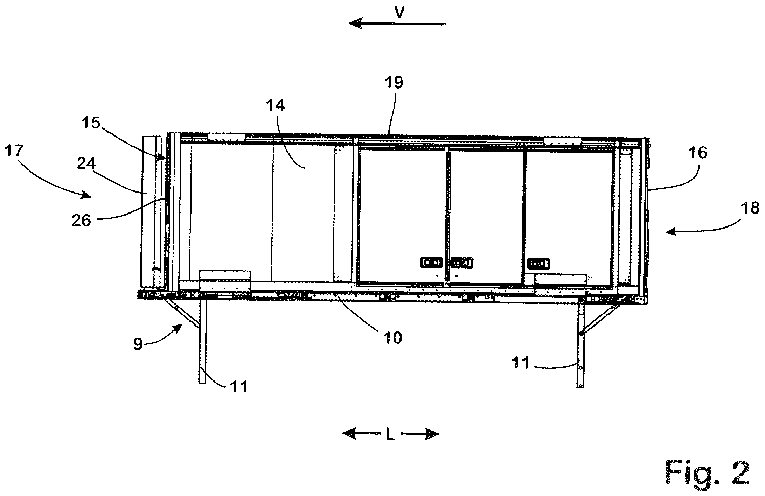

- Fig. 2: eine Wechselbrücke in seitlicher Ansicht;

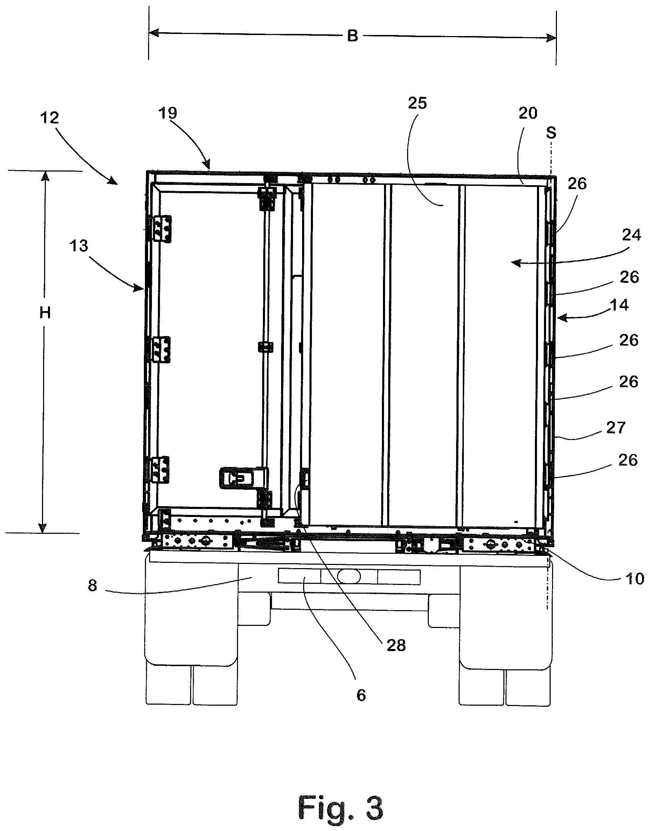

- Fig. 3: den Anhänger in einer frontalen Ansicht auf sein stirnseitiges Wandelement;

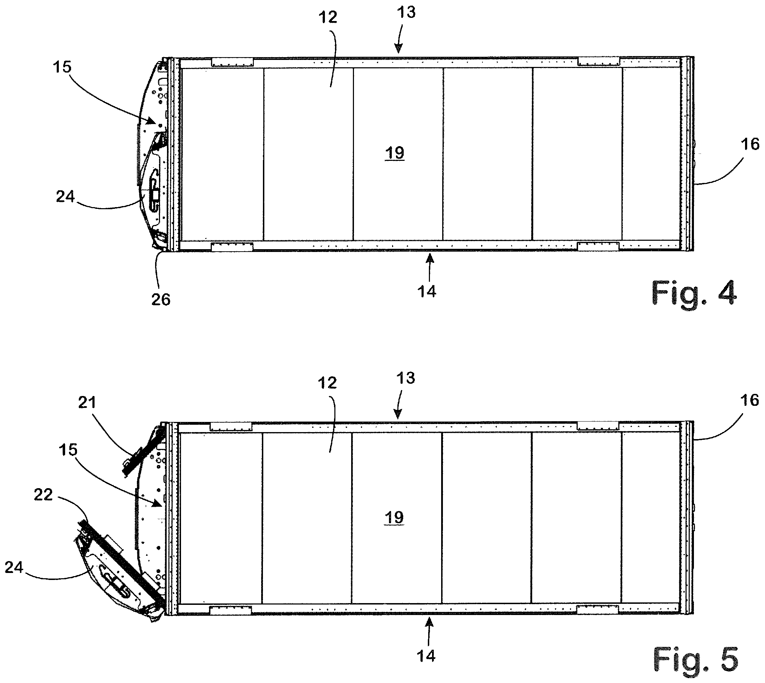

- Fig. 4: den Anhänger von oben bei geschlossenem stirnseitigem Wandelement;
- Fig. 5: den Anhänger von oben bei geöffnetem stirnseitigem Wandelement.

Der Zugverband 1 ist durch einen Lastkraftwagen 2 und einen von dem Lastkraftwagen 2 gezogenen Anhänger 3 gebildet.

Der konventionell ausgebildete Lastkraftwagen 2 umfasst ein Fahrgestell 4 mit den daran gelagerten Radachsen. An seinem vorderen Endabschnitt trägt das Fahrgestell 4 ein Führerhaus mit einem darunter angeordneten, hier nicht sichtbaren Antriebsmotor. Der übrige Teil des Fahrgestells 4 ist in an sich ebenso bekannter Weise für die Befestigung einer auf diesen Teil des Fahrgestells 4 aufgesetzten ersten Wechselbrücke 5 ausgebildet.

An seinem in Vorwärtsfahrtrichtung V gesehen rückwärtigen Ende hat das Fahrgestell 4 eine hier nicht sichtbare Kupplung, in die die Deichsel 6 des Anhängers 3 eingekuppelt ist.

Der Anhänger 3 ist wie der Lastkraftwagen 2 in an sich bekannter Weise zum Transport einer zweiten Wechselbrücke 7 ausgebildet. Dazu weist er ebenfalls ein Fahrgestell 8 auf, an dessen vorderem, dem Lastkraftwagen 2 zugeordneten Ende die Deichsel 6 befestigt ist und an dem zusätzlich ein in Bezug auf die Länge des Fahrgestells 8 etwa mittig angeordnetes Radachsenpaar gelagert ist. Die Wechselbrücke 7 sitzt wie beim Fahrgestell 4 des Lastkraftwagens 2 auf der Oberseite des Fahrgestells 8.

Die Wechselbrücken 5,7 sind baugleich. Sie weisen in an sich bekannter Weise jeweils ein Traggestell 9 mit einem Boden 10 und Stützen 11 auf, die aus einer Transportstellung, in der sie an den Boden 10 angeschwenkt sind, in eine Stützstellung verschwenkbar sind, in der sie die Wechselbrücke 5,7 in einem Abstand zum Boden 10 abstützen, auf dem die Wechselbrücke 5,7 steht, nachdem sie von dem Fahrgestell 4 des Lastkraftwagens 2 oder vom Fahrgestell 8 des Anhängers 3 getrennt worden ist und auf den nächsten Transport wartet.

Über dem Boden 10 der Wechselbrücken 5,7 ist jeweils ein Kofferaufbau 12 errichtet, der einen Laderaum für temperaturempfindliches Transportgut umgrenzt. Der Kofferaufbau 12 weist zwei Wandelemente 13,14 auf, die seine Längsseitenwände bilden und von denen sich jeweils eines längs einer der Längsseiten des Kofferaufbaus 12 in Längsrichtung L des Kofferaufbaus 12 erstreckt, zwei Wandelemente 15,16, die die Querseitenwände 15,16 des Kofferaufbaus 12 bilden und von denen sich jeweils eines an der Stirnseite 17 und an der Rückseite 18 des Kofferaufbaus 12 zwischen den ihnen zugeordneten Kanten der Längsseiten-Wandelemente 13,14 erstreckt, und ein von den Längsseiten-Wandelementen 13,14 und den Querseiten-Wandelementen 15,16 getragenes Wandelement 19, das das Dach des Kofferaufbaus 12 bildet. Die Längsseiten-Wandelemente 13,14 und das Dach-Wandelement 19 sind in an sich bekannter Weise aus Paneelen zusammengesetzt, die als Sandwichkonstruktionen aus hoch temperaturisolierenden Materialien bestehen und jeweils in einem um die jeweilige Längsseiten-Wandelemente 13,14 und das Dach-Wandelement 19 jeweils umlaufenden Rahmen 20 gehalten sind.

In den Längsseiten- Wandelementen 13,14 können Seitentüren vorgesehen sein, um eine Be- und Endladung des vom Kofferaufbau 12 umgrenzten Laderaums auch von der jeweiligen Längsseite zu ermöglichen.

Die Querseiten-Wandelemente 15,16 umfassen jeweils ebenfalls einen umlaufenden Rahmen, über den das jeweilige Querseiten-Wandelement 15,16 mit dem zugeordneten Kantenprofil des Rahmens der angrenzenden Längsseiten-Wandelemente 13,14 und des Rahmens des Dach-Wandelements 19 verbunden ist.

Beim in Vorwärtsfahrtrichtung V gesehen rückwärtigen Querseiten-Wandelement 16 des Kofferaufbaus 12 ist in konventioneller Weise eine doppelflügelige, hier nicht sichtbare Türe vorgesehen, über die die Beladung des vom Kofferaufbau 12 jeweils umgrenzten Laderaums erfolgen kann.

Am rechtwinkligen Rahmen 20 des in Vorwärtsfahrtrichtung V stirnseitigen Querseiten-Wandelements 15 sind zwei nach Art von Türflügeln ausgebildete Türelemente 21,22 gelagert, von denen das eine Türelement 22 etwa zwei Drittel der Breite B der Querseitenwand 15 und das andere Türelement 21 das verbleibende Drittel der Breite B des Querseiten-Wandelements 15 einnimmt. Die Türelemente 21,22 erstrecken sich dabei jeweils über die Höhe H der vom Rahmen 20 umgrenzten Türöffnung.

An der Außenseite des breiteren Türelements 22 ist eine Transportkältemaschine 24 befestigt, die nach Art einer konventionellen Transportkältemaschine aufgebaut ist und dazu die dort üblicherweise vorgesehenen, hier nicht gezeigten Komponenten umfasst. Diese Komponenten sind in an sich ebenso bekannter Weise in einem Rahmen der Transportkältemaschine 24 gehalten, welcher von einem Gehäuse 25 umgeben ist.

Am vertikal ausgerichteten, dem Türelement 22 zugeordneten Rahmenprofil 27 ist das Türelement 22 über fünf in gleichmäßigen Abständen über die Höhe des Rahmenprofils verteilte Scharniere 26 gelagert. Die Scharniere 26 sind dazu mit ihrem einen Schwenkglied an dem Rahmenprofil 27 und mit ihrem anderen Schwenkglied direkt am Rahmen der Transportkältemaschine 24 befestigt, so dass das vom Rahmen der Transportkältemaschine 24 aufgenommene Gewicht direkt in die Scharniere 26 und über sie direkt in das Rahmenprofil 27 der Querseitenwand 15 abgeleitet wird. Die Scharniere 26 definieren dabei eine vertikal ausgerichtete Schwenkachse S für das Türelement 22, der die Transportkältemaschine 24 trägt und mit dem gemeinsam die Transportkältemaschine 24 schwenkbeweglich ist.

Die zum Öffnen und Schließen des Türelements 22 erforderlichen Bedingungselemente 28 sind an der dem Türelement 21 zugeordneten Seitenwange des Gehäuses 25 der Transportkältemaschine 24 angeordnet, wogegen sie bei dem Türelement 21 in konventioneller Weise an dessen Außenseite positioniert sind. Auf diese Weise lassen sich die Türelemente 21,22 der Querseitenwand 15 wie eine konventionelle Türe öffnen, um die von dem Rahmen 20 umgrenzte Öffnung freizugeben.

Im Bereich des der stirnseitigen Querseitenwand 15 zugeordneten Endabschnitts des Bodens 10 der Wechselbrücken 5,7 ist jeweils ein hier nicht sichtbares Rampenelement um eine Achse schwenkbar gelagert, die sich längs der jeweiligen Querseitenwand 15 erstreckt. Das Rampenelement kann aus einer Normalstellung, in der es senkrecht zum Boden 10 ausgerichtet im Laderaum vor der Querseitenwand 15 steht und diese schützt, bei geöffneten Türelementen 21,22 in eine Gebrauchsstellung geschwenkt werden, in der es mit seiner freien Endkante im Türbereich der rückwärtigen Querseitenwand 16 des Kofferaufbaus 12 der Wechselbrücke 5 aufliegt und so ein Überfahren des Abstands zwischen dem Anhänger 3 und dem Lastkraftwagen 2 ermöglicht.

Sollen die vom jeweiligen Kofferaufbau 12 der Wechselbrücken 5 und 7 umgrenzten Laderäume mit Transportgut beladen werden, so können hierzu bei der Wechselbrücke 5 die Türe an der rückwärtigen Querseitenwand 16 des Kofferaufbaus 12 und bei der Wechselbrücke 7 die durch die Türelemente 21,22 gebildete Türe an der stirnseitigen Querseitenwand 16 sowie die Türe an der rückwärtigen Querseitenwand 16 des Kofferaufbaus 12 geöffnet werden. Erforderlichenfalls wird hierzu der Anhänger 3 zunächst vom Lastkraftwagen 2 getrennt, um unter anderem ausreichend Platz für das Verschwenken der Türelemente 21,22 zu haben. Die Transportkältemaschine 24 wird dabei gemeinsam mit dem sie tragenden Türelement 22 aus dem Öffnungsbereich der Querseitenwand 15 des Kofferaufbaus 12 der Wechselbrücke 7 geschwenkt. Nachdem nun der Anhänger 3 wieder an den Lastkraftwagen 2 angekoppelt worden ist und das Rampenelement in seine Gebrauchsstellung geschwenkt ist, können die von den Kofferaufbauten 12 der Wechselbrücken 5,7 umgrenzten Laderäume durchgeladen werden, wobei ein Gabelstapler durch die geöffnete Türe an der rückwärtigen Querseitenwand 16 des Kofferaufbaus 12 der Wechselbrücke 7 einfährt.

### BEZUGSZEICHEN

- 1: Zugverband
- 2: Lastkraftwagen
- 3: Anhänger
- 4: Fahrgestell des Lastkraftwagens 2
- 5: erste Wechselbrücke
- 6: Deichsel
- 7: zweite Wechselbrücke
- 8: Fahrgestell
- 9: jeweiliges Traggestell der Wechselbrücken 5,7
- 10: Boden des Traggestells 9
- 11: Stützen des Traggestells 9
- 12: jeweiliger Kofferaufbau der Wechselbrücken 5,7
- 13,14: Längsseitenwände der Kofferaufbauten 12
- 15,16: Querseitenwände der Kofferaufbauten 12
- 17: Stirnseite der Kofferaufbauten 12
- 18: Rückseite der Kofferaufbauten 12
- 19: Dach der Kofferaufbauten 12
- 20: Rahmen
- 21,22: nach Art eines Türflügels ausgebildete Türelemente der Querseitenwand 15
- 24: Transportkältemaschine
- 25: Gehäuse der Transportkältemaschine 24
- 26: Scharniere der Querseitenwand 15
- 27: Rahmenprofil der Querseitenwand 15
- 28: Bedingungselemente
- B: Breite der Querseitenwand 15
- H: Höhe der Querseitenwand 15
- L: Längsrichtung
- S: vertikal ausgerichtete Schwenkachse für den Türflügel 22
- V: Vorwärtsfahrtrichtung

## Patentansprüche

1. Kofferaufbau für ein Nutzfahrzeug (2,3), wobei der Kofferaufbau (12) einen Laderaum mit einer darin enthaltenen Atmosphäre umgrenzt, und wobei der Kofferaufbau (12) ein Wandelement (15) umfasst, an dem eine Transportkältemaschine (24) zum Temperieren der Atmosphäre des Laderaums sitzt, **dadurch gekennzeichnet, dass** die Transportkältemaschine (24) aus einer ersten Stellung, in der sie an dem ihr zugeordneten Wandelement (15) des Kofferaufbaus (12) sitzt, in eine zweite Stellung bewegbar ist, in der ein Durchgang zu dem Laderaum ermöglicht ist.

2. Kofferaufbau nach Anspruch 1, **dadurch gekennzeichnet, dass** das Wandelement (15) in dem Bereich, in dem die Transportkältemaschine (24) in ihrer ersten Stellung sitzt, zumindest abschnittsweise als Türelement (21,22) ausgebildet ist, das aus einer geschlossenen Stellung, in der der Durchgang zum Laderaum versperrt ist, in eine geöffnete Stellung bewegbar ist, in der der Durchgang zum Laderaum ermöglicht ist.

3. Kofferaufbau nach Anspruch 2, **dadurch gekennzeichnet, dass** das Türelement (21,22) als mindestens ein um eine an dem Kofferelement vorgesehene Schwenkachse (S) verschwenkbarer Türflügel ausgebildet ist.

4. Kofferaufbau nach Anspruch 3, **dadurch gekennzeichnet, dass** das Wandelement (15), an dem die Transportkältemaschine (24) in ihrer ersten Stellung sitzt, zusätzlich zu einem ersten Türelement (22), an dem die Transportkältemaschine (24) in ihrer ersten Stellung sitzt, ein zweites als Türflügel ausgebildetes Türelement (21) aufweist, das zwischen einer geschlossenen Stellung, in der es gemeinsam mit der dann ebenfalls in geschlossener Stellung befindlichem ersten Türelement (22) den Zugang zum Laderaum versperrt, in eine geöffnete Stellung bewegbar ist, in der der Durchgang zum Laderaum freigegeben ist.

5. Kofferaufbau nach einem der Ansprüche 2 bis 4, **dadurch gekennzeichnet, dass** die Transportkältemaschine (24) mit dem Türelement (22) verbunden ist und gemeinsam mit diesem Türelement (21,22) zwischen dessen geöffneter und geschlossener Stellung hin und her bewegbar ist.

6. Kofferaufbau nach einem der Ansprüche 2 bis 4, **dadurch gekennzeichnet, dass** die Transportkältemaschine (24) unabhängig von dem Wandelement (15) zwischen ihrer ersten Stellung, in der sie an dem Wandelement (15) sitzt, und ihrer zweiten Stellung bewegbar ist, in der sie von dem Wandelement (15) wegbewegt ist.

7. Kofferaufbau nach Anspruch 6, **dadurch gekennzeichnet, dass** die Transportkältemaschine (24) von einem Rahmen getragen ist, über den die Beweglichkeit der Transportkältemaschine (24) zwischen ihrer ersten und zweiten Stellung hergestellt ist.

8. Kofferaufbau nach einem der voranstehenden Ansprüche, **dadurch gekennzeichnet, dass** die Transportkältemaschine (24) um eine Schwenkachse (S) zwischen ihrer ersten und zweiten Stellung verschwenkbar an dem Kofferaufbau (12) gelagert ist.

9. Kofferaufbau nach Anspruch 8, **dadurch gekennzeichnet, dass** er einen Rahmen (20) aufweist, in dem mindestens das Wandelement (15), an dem die Transportkältemaschine (24) in ihrer ersten Stellung sitzt, gehalten ist und **dass** ein Gelenk oder eine Führung für die Beweglichkeit der Transportkältemaschine (24) an dem Rahmen (20) gehalten ist.

10. Kofferaufbau nach einem der voranstehenden Ansprüche, **dadurch gekennzeichnet, dass** das Wandelement (15) ein bei normaler Vorwärtsfahrt (V) des mit dem Kofferaufbau (12) jeweils ausgestatteten Nutzfahrzeugs (2,3) frontseitig angeordnetes Stirnwand-Wandelement (15) des Kofferaufbaus (12) bildet.

11. Kofferaufbau nach einem der voranstehenden Ansprüche, **dadurch gekennzeichnet, dass** die Transportkältemaschine (24) an einer vom Laderaum abgewandten Außenseite des Kofferaufbaus (12) befestigt ist.

12. Kofferaufbau nach einem der voranstehenden Ansprüche, **dadurch gekennzeichnet, dass** der Kofferaufbau (12) über einem Boden (10) errichtet ist und **dass** im Laderaum ein Rampenelement vorgesehen ist, das aus einer Normalstellung, die es inne hat, wenn der Durchgang zum Laderaum versperrt ist, bei geöffnetem Durchgang in eine Gebrauchsstellung bewegbar ist, in der das Rampenelement einen Abstand zwischen der dem Durchgang zugeordneten Ladekante und einer benachbart zu dieser angeordneten anderen Ladekante überbrückt.

13. Kofferaufbau nach Anspruch 12, **dadurch gekennzeichnet, dass** das Rampenelement um eine Schwenkachse verschwenkbar ist, die sich längs der Bodenkante erstreckt, die der mit der Transportkältemaschine (24) versehenen Querseitenwand (15) zugeordnet ist.

14. Kofferaufbau nach Anspruch 13, **dadurch gekennzeichnet, dass** das Rampenelement in seiner Normalstellung an der dem Laderaum zugeordneten Innenseite der mit der Transportkältemaschine (24) versehenen Querseitenwand (15) anliegt.

15. Kofferaufbau nach einem der voranstehenden Ansprüche, **dadurch gekennzeichnet, dass** die Transportkältemaschine (24) zum Anschluss an eine externe Energieversorgung vorgesehen ist, welche die Energie zur Verfügung stellt, über die der Antrieb der Transportkältemaschine (24) ausschließlich erfolgt.
